# EUROPEAN PATENT APPLICATION

(11) **EP 1 844 972 A1**
(43) Date of publication of application: **17.10.2007**
(21) Application number: 07105973.7
(22) Date of filing: 11.04.2007
(51) Int. Cl.: B60L 5/20

(54) **Contact strip and pantograph**

(30) Priority: 11.04.2006 JP 2006108231
(71) Applicant: TOYO TANSO CO., LTD., 555-0011 Osaka (JP)
(72) Inventor: Nozaki, Hidehiko, Kanonji-shi Kagawa 769-1614 (JP); Imajyou, Kiyoshi, Kanonji-shi Kagawa 769-1614 (JP)
(74) Representative: TBK-Patent

(57) **Abstract**

To provide a contact strip made of a carbon-based material, which can be attached by using bolts from below a collector head of a pantograph, without forming female screws directly on the contact strip. A contact strip 10 is provided with a carbon-based material member 13 having one through hole respectively in the vicinity of the ends at which tubular metal pipes 11, 12 having the tapped inner diameter are fitted and fixed and a metal sheath 14 mounted on the bottom face of the carbon-based material member 13. The sheath 14 is provided with a bore which is disposed at the same position as the opening portion on the bottom face of the through hole of the carbon-based material member 13. The collector head 15 of the pantograph is also provided with a similar bore at the same position as the sheath 14, bolts 16 and 17 are respectively inserted into the bore of the sheath 14 and that of the collector head 15 from the bottom face of the contact strip 10, and the metal pipes 11, 12 are tightened, by which the sheath 14 is fixed to the carbon-based material member 13 and the contact strip 10 is also fixed to the collector head 15.

## Description

### Technical Field

The present invention relates to a contact strip made of a carbon-based material and a pantograph using the same.

### Background Art

There have been several proposals for using a carbon contact strip as it is, as with a conventional alloy-based contact strip. However, a contact strip made of carbon-based materials excluding a C/C composite material is a fragile material which may be easily broken upon impact or the like to cause cracks and chipping. Therefore, since safety problems may be posed for a contact strip directly fixed by using bolts to a collector head of a pantograph, there is often used a method in which a metal (steel) plate having a plated surface, which is called a sheath, is used to attach the bottom of the contact strip thereto, and the contact strip is fixed by using bolts to the collector head via the sheath. The above method for attaching a contact strip to a collector head is a standard method for attaching a contact strip made of a carbon-based material.

As described above, methods for directly fixing a contact strip via a collector head, without using a sheath but by inserting a bolt from below the collector head, have been disclosed in the following Patent Documents 1 and 2. Patent Document 1 has disclosed a carbon-based current collecting sliding material obtained by the procedures in which carbon powders and highly conductive metal powders are mixed, the resultant of which is shaped under pressure, thus a shaped article is sintered at such a range of temperatures that the metal is not melted to obtain the carbon-based current collecting sliding material, with the metal powders mixed at 50 to 70% in weight, the thus obtained sintered body given the apparent specific gravity of 3.0g/cm³ or more, the impact value given 3.3kgf·cm/cm² or more, and the sinter body is directly drilled to form a threaded hole for connecting a collector head of a pantograph, and also disclosed is a method for directly fixing a contact strip made of the above-described material via the collector head by inserting a bolt from below the collector head without using a sheath, Patent Document 2 with the title of the document, "CONTACT STRIP OF PANTOGRAPH AND ATTACHMENT METHOD THEREOF" has disclosed a contact strip of a pantograph in which a collector head of the pantograph is attached to a carbon-based contact strip of the pantograph having female screw threads at least on the bottom face at one end and that at the other end by tightening bolts without using a sheath.

Further, a method for attaching a contact strip to a collector head via a sheath by using bolts has been disclosed in Patent Document 3 given below.

Still further, a method for fixing a contact strip to a collector head without using a sheath but via an accessory plate by using bolts has been disclosed in Patent Document 4 given below. That is, a method for constituting a sliding current collector has been proposed in which a groove extending substantially all over the length in a longitudinal direction is formed in the vicinity of the center of a sintered body, a metal bottom plate having a projected streak to be fitted into the groove is provided for reinforcement, a bolt hole penetrating through and arriving inside the sintered body is formed, and a bolt screwed into the thus formed bolt hole is used to attach the sintered body to the supporting member. [Patent Document 1] Patent Publication No. 2001-11479. [Patent Document 2] Patent Publication No. 2002-44803 [Patent Document 3] Patent Publication No. 2000-350303 [Patent Document 4] Patent Publication No. 2002-84602

### Disclosure of the Invention

However, common problems are found in these methods disclosed in Patent Documents 1 to 4 in which, a contact strip is fixed directly via a collector head, with a bolt inserted below the collector head, or via a sheath. That is, where a tap is used to form female screw threads directly on a carbon-based contact strip, which is a fragile material, it is difficult to clearly state that the contact strip attached to a pantograph subjected to frequent vibration is utterly free of any cracks and therefore completely safe, as stated for metal materials, even if the contact strip is reinforced at a portion in contact with a screw by using a metal such as a screw bush or strength tests are conducted by using an increased number of specimens to accumulate data. On the contrary, it is likely that an edge may remain in the vicinity of a face (interior part) sliding on the contact strip, depending on the performance of the tap, and the edge may develop into a larger crack due to vibration or impact.

Further, an operation in which a tap is used to form female screw threads on the contact strip or that in which a screw bush is inserted through the female screw threads may easily cause small cracks such as chippings even upon a small impact particularly in a carbon-based contact strip, which is a fragile material (particularly near the opening of female screw threads). Further, no sharp female screw threads are formed in the carbon-based material unlike in the case of metal materials, even if a carbide tap is used. A tap must be exchanged more often than in the case of metal materials, by which a decreased performance of the tap makes it difficult to form female screw threads perpendicularly to the piece, resulting in defects. Thus, careful work is required in checking female screw threads. The above-described procedures are time-consuming and complicated work.

As described above, the present invention is to provide a contact strip which can be attached below a collector head of a pantograph by using bolts without forming female screw threads directly on the contact strip, even where used is the contact strip made of a highly fragile carbon-based material.

The present invention is a rectangular-parallelepiped contact strip made of a carbon-based material having a bottom face and a sliding face opposed to the bottom face, which is further provided with a hole formed in a direction from the bottom face to the sliding face, and a metal pipe fixedly fitted into the hole and having, in its inside, a female screw portion. The hole may be a through hole or a non-through hole.

According to the above-described constitution, since no female screw threads are formed directly on a highly fragile carbon-based material which constitutes a contact strip, a deteriorated quality such as chipping is not found. Further, an easily workable metal pipe acts as the female screw threads, thus making it possible to provide a contact strip which can be easily attached by using bolts below a target object such as a collector head of a pantograph. Still further, the bottom face of the contact strip can be made flat to secure a mechanical strength even in the vicinity of a wear limit, by which the contact strip can be made thin and light. In addition, since the contact strip is made thin and light, it is less likely that the contact strip is separated from a trolley line upon attachment of the contact strip of the present invention to the pantograph, thereby a contact loss arc can be decreased. For example, upon attachment to the pantograph, the contact strip of the present invention is made more resistant to vibration due to the effect of the above description.

In the contact strip of the present invention, it is preferable that an outer periphery of the metal pipe is worked into any one of configurations or a combination of two or more configurations selected from a smooth curved configuration, a step configuration, a knurled configuration, a tapered configuration and a notched configuration extending from the outer to the inner diameter.

According to the above constitution, the hole is more strongly bound with an adhesive agent coated on the outer periphery of a metal pipe, and the metal pipe is prevented from rotating loosely, with the torque applied thereto, when a bolt is tightened.

In the contact strip of the present invention, it is preferable that a metal pipe is attached and fixed into the hole by using any one of adhesive agents based on epoxy, cyanoacrylate and phenol resins, with the adhesive agent coated on the outer periphery of the metal pipe.

According to the above constitution, the metal pipe can be securely fixed into the hole. For example, when attached by using bolts from below the collector head of the pantograph, the metal pipe can be fixed in a more stable manner and is resistant to vibration to a greater extent.

In the contact strip of the present invention, it is preferable that the carbon-based material is made of a copper-impregnated carbon material in which copper-based metal is impregnated into a carbon material or a mixed/sintered carbon material in which carbon powders are mixed with copper powders, the resultant of which is shaped and sintered.

According to the above constitution, a contact strip excellent in wear resistance can be provided. As a result, for example, not only can the contact strip of the present invention be attached to a collector head of a pantograph, without having quality-related problems such as cracks and chips, but also a collector head used in a conventional metal alloy-based contact strip can be used as it is, because the contact strip can be made thin.

The contact strip of the present invention is characterized in that a bore is formed and a metal sheath mounted on the bottom face is provided so that the bore is disposed at the same position as the opening portion of the hole.

According to the above constitution, the contact strip of the present invention can be attached to a target object such as a collector head of a pantograph through a metal sheath. Thereby, even a contact strip made of a fragile carbon-based material which has been so far used can be attached safely, with the contact strip made thin in thickness. Further, there is no chance that the body of the contact strip may be damaged on attachment by using bolts.

In the contact strip of the present invention, it is preferable that a conductive adhesive agent is coated on the bottom face and a face in contact with the metal sheath.

According to the above constitution, it is possible to protect the metal sheath and the contact strip, while the contact strip and the metal sheath are secured for electric conductivity.

In the contact strip of the present invention, it is preferable to provide a leeway for the adhesive agent on the bottom face of the hole.

According to the above constitution, the adhesive agent is less likely to adhere on the bottom face in a case where a redundant adhesive agent oozes out from the hole to the bottom face upon adhesion of the metal pipe, thereby making it possible to easily retain the bottom face having a smooth flat face.

The pantograph of the present invention is provided with a collector head having a bore through which a bolt can be inserted, in which a contact strip mounted with the above-described metal sheath and the collector head are tightened and fixed by the bolt inserted into the bore of the collector head and the metal pipe.

According to the above constitution, a pantograph resistant to vibration can be provided.

### Brief Explanation of the Drawings

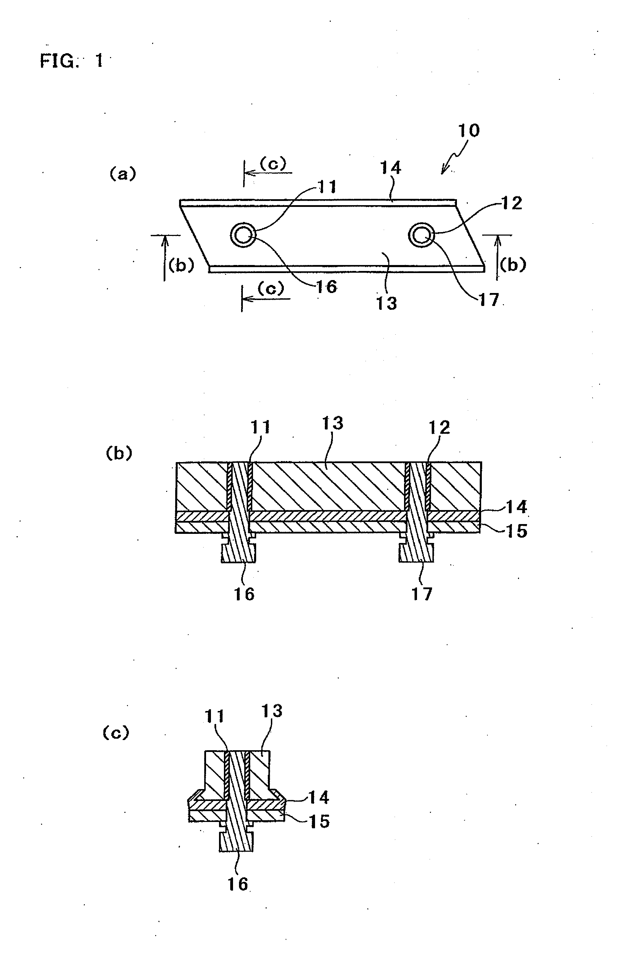

In Figs. 1, Fig. 1A is a view illustrating a contact strip and a collector head of a pantograph according to Embodiment 1 of the present invention when viewed from above, Fig. 1B is a sagittal sectional view taken along line (b) to (b) in Fig. 1A, and Fig. 1C is a sagittal sectional view taken along line (c) to (c) in Fig. 1A.

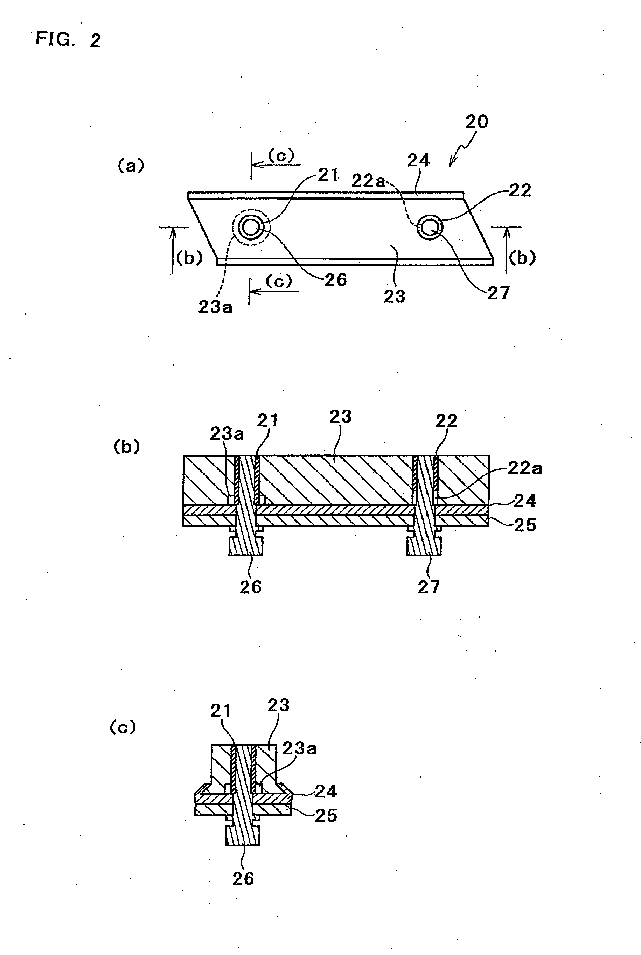

In Figs. 2, Fig. 2A is a view illustrating a contact strip and a collector head of a pantograph according to Embodiment 2 of the present invention when viewed from above, Fig. 2B is a sagittal sectional view taken along line (b) to (b) in Fig. 2A, and Fig. 2C is a sagittal sectional view taken along line (c) to (c) in Fig. 2A.

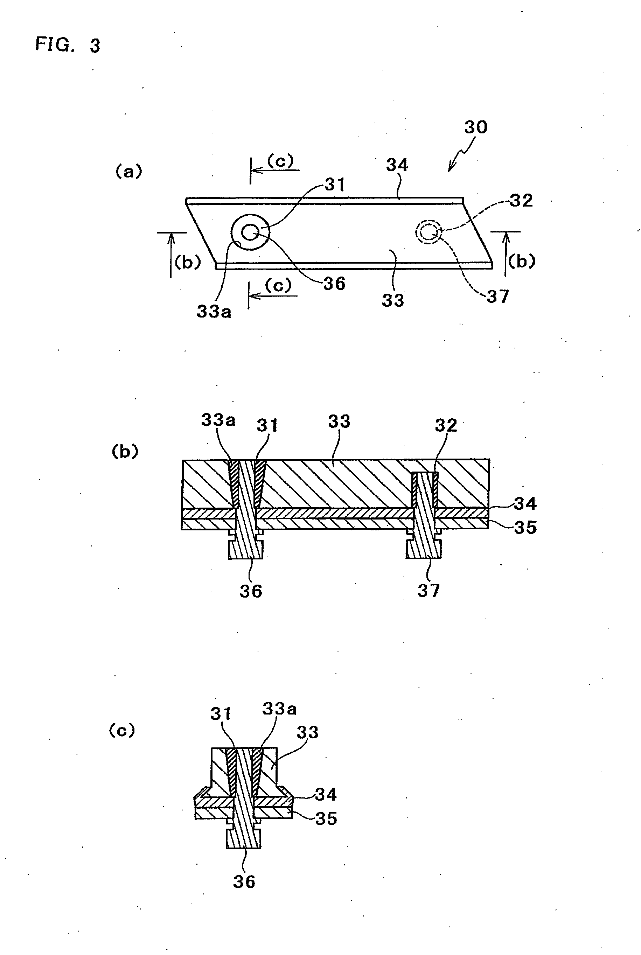

In Figs. 3, Fig. 3A is a view illustrating a contact strip and a collector head of a pantograph according to Embodiment 3 of the present invention, when viewed from above, Fig. 3B is a sagittal sectional view taken along line (b) to (b) in Fig. 3A, and Fig. 3C is a sagittal sectional view taken along line (c) to (c) in Fig. 3A.

### Best Mode for Practicing the Invention

### <Embodiment 1>

Next, a description will be made according to a contact strip of Embodiment 1 in the present invention. In Fig. 1, 1A is a view illustrating a contact strip and a collector head of a pantograph in Embodiment 1 of the present invention when viewed from above, Fig. 1B is a sagittal sectional view taken along line (b) to (b) in Fig. 1A, and Fig. 1C is a sagittal sectional view taken along line (c) to (c) in Fig. 1A. It is noted that since Fig. 1A is a view viewed from above, the collector head of the pantograph is located behind the contact strip and not visible (in a hidden state).

A contact strip 10 of the present embodiment is provided with an approximately rectangular-parallelepiped carbon-based material member 13 having one through hole respectively in the vicinity of the ends at which tubular metal pipes 11, 12 having a tapped inner diameter (not illustrated) are fitted and fixed and a metal sheath 14 mounted on the bottom face of the carbon-based material member 13. The sheath 14 is provided with a bore which is disposed at the same position as the opening portion of the through hole on the bottom face of the carbon-based material member 13. The collector head 15 of the pantograph is also provided with a similar bore at the same position as the sheath 14, bolts 16 and 17 are respectively inserted into the bore of the sheath 14 and that of the collector head 15 from the bottom face of the contact strip 10, and the metal pipes 11, 12 are tightened, by which the sheath 14 is fixed to the carbon-based material member 13 and the contact strip 10 is also fixed to the collector head 15. Thereby, the contact strip 10 is kept attached to the pantograph (not illustrated).

The metal pipes 11, 12 are equal to or slightly shorter than an axial length of the through hole of the carbon-based material member 13 and disposed so as not to be projected from the bottom face of the carbon-based material member 13. Further, the metal pipes 11, 12 are made of brass or stainless steel but not restricted thereto. In other words, they may be made of other metal materials. Still further, the metal pipes 11, 12 are adhered and fixed to the through hole of the carbon-based material member 13 by using an adhesive agent coated on the outer periphery thereof. The adhesive agent includes that based on epoxy, cyanoacrylate or phenol resin.

The carbon-based material member 13 is an approximately rectangular-parallelepiped member having a projected portion along a length direction on the bottom face at both side faces. The material member is a copper-impregnated carbon material in which copper-based metal is impregnated into a carbon material or a mixed/sintered carbon material in which carbon powders are mixed with copper powders, the resultant of which is shaped and sintered. Since these materials are used to prepare a contact strip excellent in wear resistance, it is preferable that the contact strip which is made thin, without problems such as chips or cracks resulting from a part of the attachment thereof, can be mounted on the collector head. It is noted that other carbon materials may be used similarly, in addition to the above-described materials.

The sheath 14 is a metal member, the cross section of which is approximately in a U shape (for example, tin-plated steel plate, copper plate, phosphor copper plate, phosphor bronze plate and others, in addition to zinc-plated steel plate), thereby protecting the bottom face and the projected portion of the carbon-based material member 13. A conductive adhesive agent is coated on the sheath 14 and a face in contact with the bottom face of the carbon-based material member 13.

The bolts 16 and 17 are those of brass or carbon steel subjected to decorative chromium plating. In addition, other metal materials or plated ones may be used similarly.

The wear allowance can be increased or decreased by adjusting the height of the sheath 14 (the vertical direction in Fig. 1C) . However, a lower height of the sheath will result in a smaller contact-strip retaining force.

According to the above-described constitution, since female screw threads are not formed directly on a highly fragile carbon-based material 13, there is no deteriorated quality such as chips. Further, easily workable metal pipes 11, 12 act as female screw threads, thus making it possible to provide a contact strip 10 which can be easily attached by using the bolts 16 and 17 from below a collector head 15 of a pantograph. Still further, the bottom face of the contact strip 10 can be made flat to secure a mechanical strength even in the vicinity of wear limit, by which the contact strip 10 can be made thin and light. In addition, since the contact strip 10 is made thin and light, it is less likely that the contact strip 10 is separated from a trolley line upon attachment of the contact strip to the pantograph, thereby making it possible to decrease a contact loss arc. For example, upon attachment to the pantograph, the contact strip 10 is made more resistant to vibration due to the effect of the above description.

Further, since an adhesive agent is used to firmly fix the metal pipes 11, 12 to through holes of the carbon-based material member 13, they can be fixed more stably upon attachment by using bolts 16 and 17 from below the collector head 15 of the pantograph, thereby giving a greater resistance to vibration.

Still further, since the contact strip can be attached to the collector head 15 of the pantograph via the sheath 14, there is no chance that the carbon-based material member 13 may be damaged on attachment by using the bolts 16 and 17,

In addition, it is possible to protect the metal sheath and the contact strip, while the contact strip and the metal sheath are secured for the electric conductivity.

It is noted that the carbon-based material member 13 is provided with a through hole. However, it may be provided with a non-through hole, where it has an opening portion on the bottom face. In this case, the metal pipes 16 and 17 are made equal to or slightly shorter in length than the depth of the hole so as not to be projected from the bottom face of the carbon-based material member 13.

### <Embodiment 2>

Next, a description will be made for a contact strip according to Embodiment 2 of the present invention. In Figs. 2, Fig. 2A is a view illustrating a contact strip and a collector head of a pantograph according to Embodiment 2 of the present invention when viewed from above, Fig. 2B is a sagittal sectional view taken along line (b) to (b) in Fig. 2A, and Fig. 2C is a sagittal sectional view taken along line (c) to (c) in Fig. 2A. It is noted that since Fig. 2A is a view viewed from above, the collector head of the pantograph is located behind the contact strip and not visible (in a hidden state). Further, portions (numerals 20 to 27) similar to those in Embodiment 1 are given the numerals 10 to 17, and the description thereof is omitted.

The contact strip 20 of the present embodiment is different from the contact strip 10 of Embodiment 1 in that (1) a notch 22a is formed on the bottom face of the carbon-based material member 23 on the metal pipe 22 and (2) a leeway 23a of the adhesive agent for fixing the metal pipe 21 to a through hole is formed on the bottom face of the carbon-based material member 23 on the through hole of the metal pipe 21.

The metal pipe 22 is provided on the bottom face of the carbon-based material member 23 with a symmetrical notch 22a which plays the same role as the leeway 23a.

According to the above constitution, similar effects as obtained in Embodiment 1 can be obtained, and in a case where excess adhesive agent oozes out from the through hole to the bottom face upon adhesion of the metal pipe 21, the adhesive agent is less likely to adhere on the bottom face, thereby making it possible to easily retain a bottom face having a smooth flat face.

### <Embodiment 3>

Next, a description will be made for a contact strip according to Embodiment 3 of the present invention. In Fig. 3, Fig. 3A is a view illustrating a contact strip and a collector head of a pantograph according to Embodiment 3 of the present invention when viewed from above, Fig. 3B is a sagittal sectional view taken along line (b) to (b) in Fig. 3A, and Fig. 3C is a sagittal sectional view taken along line (c) to (c) in Fig. 3A. It is noted that since Fig. 3A is a view viewed from above, the collector head of the pantograph is located behind the contact strip and not visible (in a hidden state). Further, portions (numerals 30 to 37) similar to those in Embodiment 1 are given the numerals 10 to 17, and the description thereof is omitted.

The contact strip 30 of the present embodiment is different from the contact strip 10 of Embodiment 1 in that (1) the through hole 33a of the carbon-based-material member 33 on which a metal pipe 31 is disposed is tapered, (2) the metal pipe 31 has an outer configuration along the through hole 33a, and (3) a hole formed in the vicinity of the end opposed to the through hole 33a is a non-through and the axial length of the metal pipe 32 is equal to the depth of the hole.

The through hole 33a of the carbon-based material member 33 is tapered, and the metal pipe 31 tapered along the through hole 33a is inserted from the sliding face (before the insertion, an adhesive agent is coated on an outer periphery of the metal pipe 31 or an inner periphery of the through hole 33a) and tightened by using the bolt 36.

According to the above constitution, similar effects as obtained in Embodiment 1 can be obtained. Since the through hole of the carbon-based material member 33 is tapered, the bolt is substantially prevented from rotating loosely when torque is applied thereto. Further, since the other hole is a non-through hole, drilling work on both ends can be reduced by half on such work.

### [Example]

Next, a description will be made for the present invention with reference to examples.

### (Example 1)

In a carbon-based contact strip PC-78A (Toyo Tanso Co., Ltd.) with dimensions of 40 x 270 x 15 mm, the bottom face of which is made flat, a brass pipe having the tapped inner diameter is buried into the carbon-based contact strip material and fixed by using an adhesive agent, and a zinc-plated steel sheath is then mounted thereon. The mass of the contact strip including brass bolts, nuts, washers and spring washers is 650g, a designed wear allowance is 10mm, and a ratio of wear allowance to contact strip is 67%.

### (Example 2)

In a mixed/sintered carbon-based contact strip with dimensions of 40 x 270 x 12.3 mm, the bottom face of which is made flat, a brass pipe having the tapped inner diameter is buried into the carbon-based contact strip material and fixed by using an adhesive agent, and a zinc-plated steel sheath is mounted thereon after a conductive adhesive agent is coated inside the steel sheath. The mass of the contact strip including brass bolts, nuts, washers and spring washers is 570g, a designed wear allowance is 8.3 mm, and a ratio of wear allowance to the contact strip is 67%. It is noted that the mixed/sintered carbon-based contact strip was produced in a method similar to that disclosed in Example 2 of the Japanese Published Unexamined Patent Application No. 2004-76098.

### (Example 3)

In a carbon-based contact strip PC-78A (Toyo Tanso Co., Ltd.) with dimensions of 40 x 270 x 10 mm, the bottom face of which is made flat, a brass pipe having the tapped inner diameter is buried into the carbon-based contact strip material and fixed by using an adhesive agent, and a copper sheath is then mounted thereon. The mass of the contact strip including brass bolts, nuts, washers and spring washers is 750g, a designed wear allowance is 14 mm, and a ratio of wear allowance to the contact strip is 78%.

### (Comparative Example 1)

Carbon steel (subjected to decorative chromium plating) bolts and a zinc-plated steel sheath are mounted on a carbon-based contact strip PC-78A (Toyo Tanso Co., Ltd.) with dimensions of 40 x 270 x 23 mm having a groove (14 mm in width and 6 mm in height) on the bottom face. The mass of the contact strip including nuts, washers and spring washers is 820 g, an actual wear allowance at each electric car depot is 10mm, and a ratio of wear allowance to the contact strip is 43%.

Examples 1 to 3 and Comparative Example 1 are tabulated in Table 1 given below. It is noted that the mass percentage reduction indicates a mass percentage reduction of each Example on the basis of Comparative Example 1.

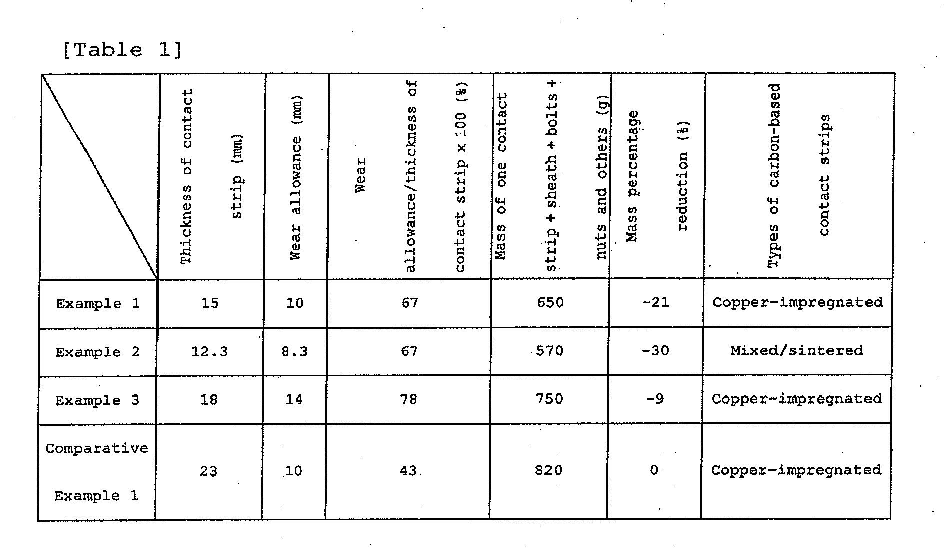

It is apparent from Table 1 that, as compared with a conventional contact strip, the thickness of which is 23 mm (Comparative Example 1), the contact strip of the present invention can be made thin, or approximately from 12.3 to 18 mm in thickness (Examples 1 to 3), and accordingly the mass of the contact strip including the sheath and bolts is decreased by 9 to 30%. In this case, the wear allowance is 8.3 to 14 mm or 67 to 78% in terms of (wear allowance/thickness of contact strip) x 100 (%).

It is to be understood that the present invention is not restricted to the above-described embodiments or examples but may be modified for design within a range not departing from the scope of the invention. For example, an outer periphery of the metal pipe may be worked into a step configuration or a knurled configuration (the surface is irregular). Further, two or more combinations of configurations selected from those of the metal pipe in the above embodiments with the step configuration or the knurled configuration may be acceptable. Thereby, it is possible to reinforce an adhesive force of an adhesive agent coated on a space formed between the metal pipe and the contact strip into which the metal pipe is fitted. Where the metal pipe is worked into a step configuration, a knurled configuration, a tapered configuration or a notched configuration extending from the outer to the inner diameter, a binding force between the metal pipe and the contact strip can be made stronger by using the adhesive agent, by which the metal pipe is less likely to rotate loosely on tightening with bolts, as compared with the metal pipe having only a smooth curved configuration.

To provide a contact strip made of a carbon-based material, which can be attached by using bolts from below a collector head of a pantograph, without forming female screws directly on the contact strip. A contact strip 10 is provided with a carbon-based material member 13 having one through hole respectively in the vicinity of the ends at which tubular metal pipes 11, 12 having the tapped inner diameter are fitted and fixed and a metal sheath 14 mounted on the bottom face of the carbon-based material member 13. The sheath 14 is provided with a bore which is disposed at the same position as the opening portion on the bottom face of the through hole of the carbon-based material member 13. The collector head 15 of the pantograph is also provided with a similar bore at the same position as the sheath 14, bolts 16 and 17 are respectively inserted into the bore of the sheath 14 and that of the collector head 15 from the bottom face of the contact strip 10, and the metal pipes 11, 12 are tightened, by which the sheath 14 is fixed to the carbon-based material member 13 and the contact strip 10 is also fixed to the collector head 15.

## Claims

1. A rectangular-parallelepiped contact strip made of a carbon-based material and having a bottom face and a sliding face opposed to the bottom face,
the contact strip which is provided with a hole formed in a direction from the bottom face to the sliding face and a metal pipe having a tapped inner diameter which is fitted and fixed into the hole.

2. A contact strip as set forth in Claim 1, wherein an outer periphery of the metal pipe is worked into any one of configurations or a combination of two or more configurations selected from a smooth curved configuration, a step configuration, a knurled configuration, a tapered configuration and a notched configuration extending from the outer to the inner diameter.

3. A contact strip as set forth in Claim 1 or Claim 2, wherein the metal pipe is attached and fixed into the hole by using any one of adhesive agents based on epoxy, cyanoacrylate and phenol resins, with the adhesive agent coated on the outer periphery of the metal pipe.

4. A contact strip as set forth in any one of Claim 1 to Claim 3, wherein the carbon-based material is a copper-impregnated carbon material in which copper-based metal is impregnated into a carbon material or a mixed/sintered carbon material in which carbon powders are mixed with copper powders, the resultant of which is shaped and sintered.

5. A contact strip as set forth in any one of Claim 1 to Claim 4, wherein a bore is formed and a metal sheath mounted on the bottom face is provided so that the bore is disposed at the same position as the opening portion of the hole.

6. A contact strip as set forth in any one of Claim 1 to Claim 5, wherein a conductive adhesive agent is coated on the bottom face and a face in contact with the metal sheath.

7. A contact strip as set forth in any one of Claim 1 to Claim 6, wherein a leeway of the adhesive agent is formed on the bottom face of the hole.

8. A pantograph which is provided with a collector head having a bore through which a bolt is inserted, the pantograph in which the contact strip described in any one of Claim 5 to Claim 7 is tightened and fixed to the collector head by using the bolt inserted into the bore of the collector head and the metal pipe.
